# EUROPÄISCHE PATENTANMELDUNG

(11) **EP 1 944 516 A1**
(43) Veröffentlichungstag der Anmeldung: **16.07.2008**
(21) Anmeldenummer: 07025059.2
(22) Anmeldetag: 22.12.2007
(51) Int. Cl.: F16C 13/00

(54) **Hohlwalze**

(30) Priorität: 09.01.2007 DE 202007000269 U
(71) Anmelder: Kitz, Hans Josef, 53844 Troisdorf (DE)
(72) Erfinder: Kitz, Hans Josef, 53844 Troisdorf (DE)
(74) Vertreter: Müller-Gerbes Wagner Albiger Patentanwälte

(57) **Zusammenfassung**

Die Erfindung betrifft eine Hohlwalze mit einem Walzenmantel und einem inneren Hohlraum (101), wobei eine Ausbildung des Walzenmantels aus mehreren Hohlprofilsegmenten (1), die an ihren Radialflächen (14) mittels innerhalb des Hohlraumes (101) angeordneter Spannelemente zu der Hohlwalze verbunden sind.

## Beschreibung

Die Erfindung betrifft eine Hohlwalze mit einem Walzenmantel und einem inneren Hohlraum. Derartige mit innerem Hohlraum ausgestattete Hohlwalzen finden beispielsweise als Transport- und Übertragungswalze in Druckwerken und verschiedenen anderen Maschinen Anwendung, wobei durch den inneren Hohlraum neben verbesserter mechanischer Stabilität und geringerem Gewicht auch die Temperierung des Walzenmantels z.B. durch ein Temperiermedium oder -fluid ermöglicht ist.

Die Herstellung derartiger Hohlwalzen üblicherweise aus gezogenen Rohren ist jedoch aufwändig und unflexibel, was verbesserungswürdig erscheint.

Die Erfindung schlägt daher gemäß den Merkmalen des Schutzanspruches 1 vor, den Walzenmantel aus mehreren Hohlprofilsegmenten auszubilden, die an ihren Radialflächen mittels innerhalb des Hohlraumes angeordneter Spannelemente zu der Hohlwalze verbunden sind. Die Hohlprofilsegmente können beispielsweise als Strangpressprofile aus Aluminium oder Kunststoff nach an sich bekannten Fertigungsverfahren hergestellt werden, was besonders preiswert und rationell erfolgen kann.

Aus einer entsprechenden Anzahl derartiger und vorzugsweise identisch zueinander ausgebildeter Hohlprofilsegmente lassen sich sodann Hohlwalzen in nahezu beliebiger Länge zusammenstellen und mittels der Spannelemente zu einem starren Gebilde zusammenfügen.

Damit die zusammengefügten Hohlprofilsegmente auch bei hoher Last und/oder Drehzahl einer derartigen Hohlwalze dauerhaft und sicher miteinander verspannt sind, muss den Spannelementen besonderes Augenmerk gelten.

Gemäß einem Vorschlag der Erfindung ist hierzu vorgesehen, die Hohlprofilsegmente im Bereich ihrer den Hohlraum begrenzenden Innenflächen mit einander zugewandten Spannhaken für den Eingriff der Spannelemente auszubilden. Die Spannelemente werden von daher innerhalb der Hohlraumes der gebildeten Hohlwalze angeordnet, so dass sie einerseits leicht montierbar sind, indem sie z.B. axial in den Hohlraum einschiebbar sind und können entsprechend groß dimensioniert werden, um die erforderlichen Spannkräfte zu realisieren.

Nach einem Vorschlag der Erfindung können die Spannhaken radial über die Innenfläche der Hohlprofilsegmente vorstehen. Es ist jedoch gleichermaßen auch möglich, die Spannhaken so auszubilden, dass sie innerhalb der Kontur der Innenfläche des Walzenmantels verbleiben und auch die Spannelemente können entsprechend in der Innenfläche des Walzenmantels versenkt angeordnet werden, was nachfolgend noch näher erläutert werden wird.

Nach einem Vorschlag der Erfindung sind die Spannelemente von paarweise angeordneten Spannringen gebildet, die entlang ihres den Innenflächen benachbarten Außenumfanges mit vorstehenden und mit den Spannhaken in Wirkverbindung bringbaren Spannklauen ausgerüstet sind. Solche paarweise angeordneten Spannringe bzw. Spannringpaare können über die axiale Längenerstreckung der Hohlwalze gesehen in regelmäßigen Abständen oder auch nur in den Endbereichen der Hohlwalze vorgesehen werden, was vom Fachmann je nach Belastungsfall auszuwählen ist.

Die Spannklauen des einen Spannringes weisen in entgegengesetzte Richtung zu den Spannklauen des anderen Spannringes eines Spannringpaares, so dass die Spannringe mit ihren jeweiligen in unterschiedliche Richtungen weisenden Spannklauen jeweils wechselweise mit den entsprechenden Spannhaken der Hohlprofilsegmente in Wirkverbindung treten, d.h. jedes Hohlprofilsegment weist zwei einander zugewandte Spannhaken an dem jeweiligen Endbereich des Hohlprofilsegmentes auf und die Spannklaue des einen Spannringes tritt nur mit einem Spannhaken in Wirkverbindung, während die Spannklaue des anderen Spannringes eines Spannringpaares mit dem anderen Spannhaken in Wirkverbindung tritt. Zum Aufbringen der Verspannkraft sind sodann die Spannringe eines Spannringpaares mittels mindestens einer Verspanneinrichtung relativ zueinander verdrehbar, so dass die Spannringe aus einer geöffneten und ein einschieben in den Hohlraum ermöglichenden Position relativ zueinander um einen gewissen Winkelbetrag verdrehbar sind, so dass die Verklemmung der Spannklauen mit den Spannhaken in der gewünschten Weise erfolgt und die aneinander angrenzenden Hohlprofilsegmente unter Ausbildung der Hohlwalze aneinander gepresst werden.

Die Verspanneinrichtung kann von einer in koaxialen Aufnahmebohrungen der Spannringe eines Spannringpaares verdrehbaren Spannschraube mit unrundem Querschnitt gebildet sein, so dass z.B. bei einer viertel Umdrehung der Spannschraube die gewünschte relative Verdrehung der beiden Spannringpaare zueinander bewirkt wird. Es versteht sich, dass bei einer derartigen Ausgestaltung der Verspanneinrichtung die Verspannung der aneinander angrenzenden Hohlprofilsegmente reversibel, d.h. lösbar erfolgt, was bei späteren Demontage- und Wartungsarbeiten besonders vorteilhaft ist.

In einer weiteren Ausgestaltung der Erfindung kann auch vorgesehen sein, die Spannringe nicht einstückig sondern segmental aus miteinander verketteten Spannringgliedern zu bilden, um Spannringe für verschiedene Durchmesser des inneren Hohlraumes derartiger Hohlwalzen bereitzuhalten.

In einer alternativen Ausgestaltung der erfindungsgemäßen Hohlwalze sind die Spannelemente von im Querschnitt betrachtet U-förmigen Spannbügeln gebildet, die mit jeweils benachbarten Spannhaken aneinander angrenzender Hohlprofilsegmente in Wirkverbindung bringbar sind.

Vorteilhaft weist dabei der Spannbügel eine Hohlkehle und die mit dem Spannbügel verspannten Hohlprofilsegmente weisen entsprechende Auskehlungen dergestalt auf, dass sie in zusammengefügtem Zustand gemeinsam eine zylindrische Bohrung ausbilden, in die dann Spannbomben und/oder Gewindebolzen einbringbar sind, um eine ausreichend hohe Spannkraft zu erzeugen.

Eine lagegenaue Positionierung der aneinander angefügten Hohlprofilsegmente kann darüber hinaus dadurch erreicht werden, dass jeweils wechselweise die aneinander angefügten Hohlprofilsegmente mit einem zylindrischen Vorsprung und entsprechender Hohlkehle im Bereich ihrer Radialflächen ausgebildet sind.

Darüber hinaus können die Hohlprofilsegmente im Bereich ihrer Radialflächen mit Profilierungen zur Aufnahme von Dichtmitteln ausgebildet sein, was insbesondere bei der Durchleitung von Temperiermedien durch den inneren Hohlraum von Vorteil ist, da die Dichtmittel sodann ein unerwünschtes Austreten auf die Außenfläche der Hohlwalze unterbinden.

Es wird im Rahmen der Erfindung als besonders vorteilhaft angesehen, dass die Hohlwalze mit einer entsprechenden Teilung aus einer der Teilung entsprechenden Anzahl an identischen Hohlprofilsegmenten und Spannringen bzw. Spannringgliedern gefertigt werden kann, was die Bauteilvielfalt enorm reduziert und erhebliche Kostenvorteile mit sich bringt.

Die zur Hohlwalze zusammengefügten und mittels der Spanneinrichtung verspannten Hohlprofilsegmente können sodann in einer Aufspannung außenseitig nachbearbeitet werden, beispielsweise überdreht werden, wodurch sehr glatte Oberflächen erreicht werden, auf der die Teilungsfugen zwischen einzelnen Segmenten aufgrund der hohen erreichbaren Flächenpressung nahezu nicht mehr sichtbar sind. Bei sehr kritischen Anwendungen ist es darüber hinaus auch möglich, auf die Außenfläche noch eine Beschichtungsauflage, beispielsweise eine Gummierung oder dergleichen aufzubringen.

Die axialen Enden der solchermaßen aus Segmenten hergestellten Hohlwalze können mit Naben und Achsstummeln verschlossen werden, so dass eine Einspannung in Maschinengestelle möglich wird oder auch mit Naben und einer durchgehenden Achse versehen werden, was vom Fachmann je nach Anwendungsfall auszuwählen ist.

Weitere Ausgestaltungen und Einzelheiten der Erfindung werden nachfolgend anhand von Ausführungsbeispielen in der Zeichnung erläutert. Es zeigen:
- Figur 1: die Seitenansicht einer ersten Ausführungsform der erfindungsgemäßen Hohlwalze mit in Öffnungsstellung befindlichem Spannelement;
- Figur 2: die Hohlwalze gem. Figur 1 mit verspanntem Spannelement;
- Figur 3: ein Hohlprofilsegment gem. Figur 1;
- Figur 4: ein Spannelement gem. Figur 1;
- Figur 5: eine weitere Ausführungsform der erfindungsgemäßen Hohlwalze mit in Öffnungsstellung befindlichem Spannelement;
- Figur 6: die Hohlwalze gemäß Figur 5 mit verspanntem Spannelement;
- Figur 7: ein Spannglied gem. Darstellung in Figur 6;
- Figur 8: eine weitere Ausführungsform einer erfindungsgemäßen Hohlwalze;
- Figur 9: ein Hohlprofilsegment der Hohlwalze gem. Figur 8;
- Figur 10: in vergrößerter Darstellung einen Teilschnitt durch den Verbindungsbereich zweier aneinander anliegender Hohlprofilsegmente gem. Figur 8;
- Figur 11: den Schnitt gem. Pfeilen A-A in Figur 10.

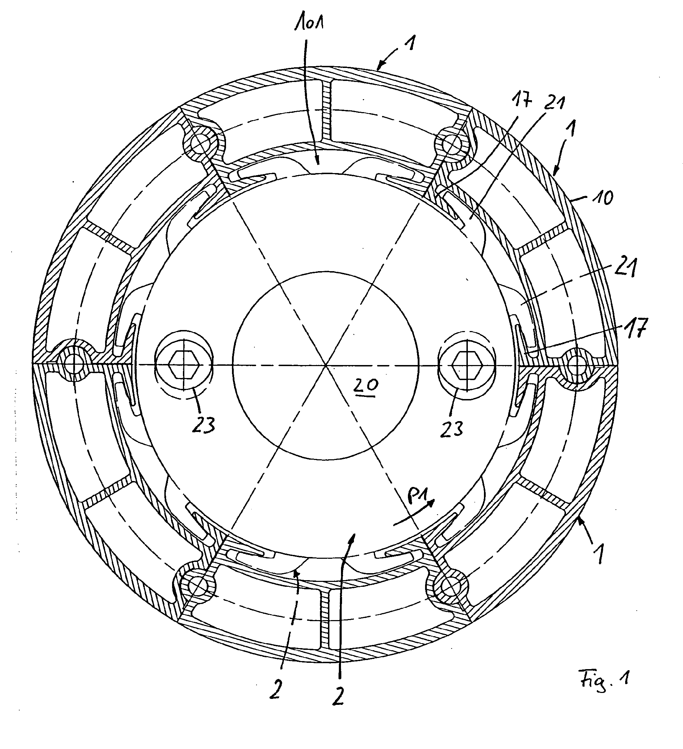

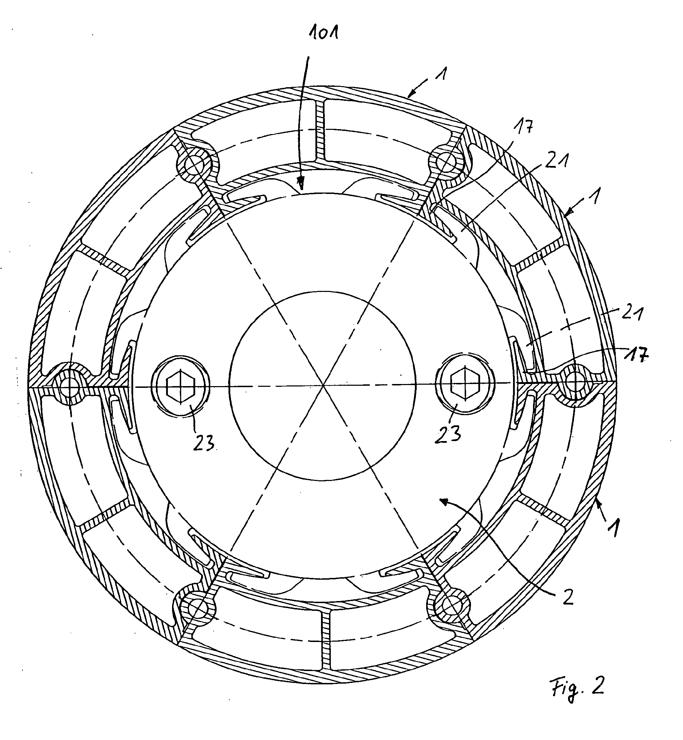

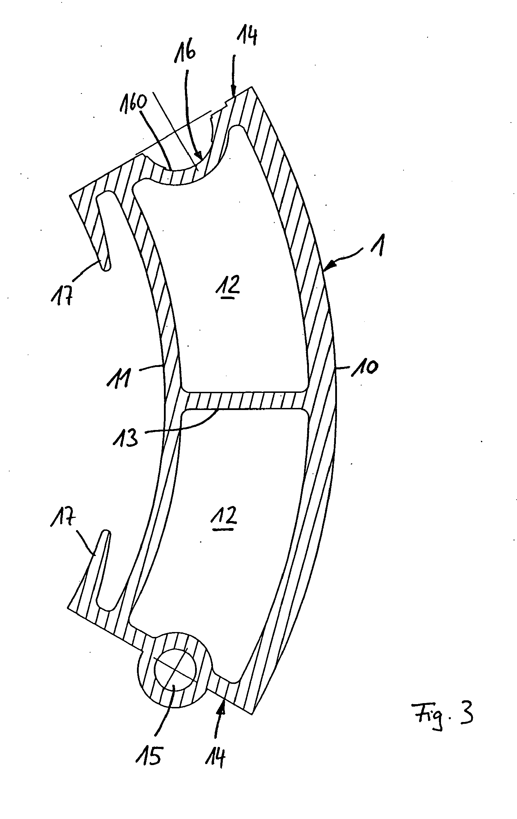

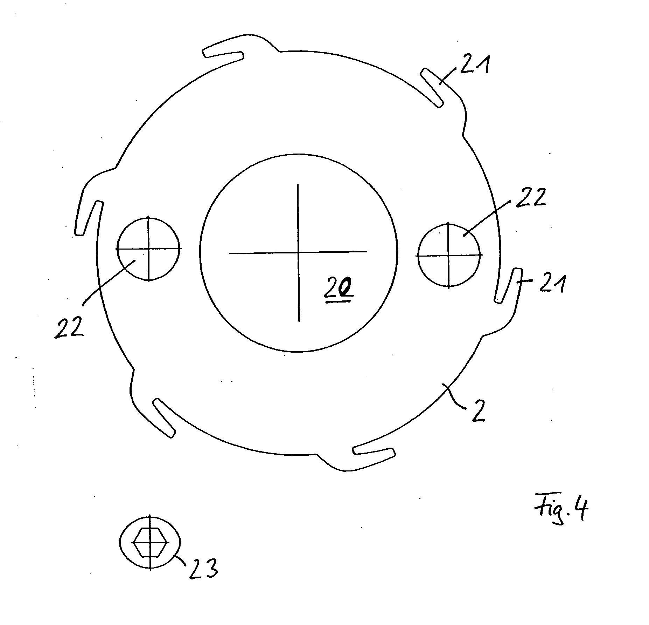

In den Figuren 1 und 2 ist eine Hohlwalze dargestellt, deren Walzenmantel von mehreren, hier sechs segmental aneinander gefügten Hohlprofilsegmenten 1 aus stranggepresstem Aluminium erstellt ist, von denen ein Hohlprofilsegment 1 in vergrößerter Darstellung in der Figur 3 dargestellt ist. Die Hohlprofilsegmente 1 werden mittels einer Spanneinrichtung mit Spannringen 2, siehe auch Figur 4 verspannt, so dass die Hohlprofilsegmente 1 einen inneren Hohlraum 101 umgrenzen, in dem auch die Spanneinrichtung angeordnet ist.

Wie aus der Figur 3 ersichtlich, sind die allesamt identisch ausgebildeten Hohlprofilsegmente 1 aus einem stranggepressten Aluminiumprofil hergestellt und definieren eine Außenfläche 10, welche zugleich die Außenfläche der Hohlwalze ist und eine Innenfläche 11, welche zugleich die Innenfläche der Hohlwalze darstellt. Zwischen diesen Flächen 10, 11 werden Hohlkammern 12 ausgebildet, die durch einen Steg 13 voneinander abgeteilt sind. Ferner umfasst jedes Hohlprofilsegment 1 an seinen Stirnseiten Radialflächen 14, an denen die einzelnen Hohlprofilsegmente 1 zu der Hohlwalze aneinandergefügt werden.

Um beim Aneinanderfügen eine lagegenaue Positionierung zu erreichen, ist ein Ende des Hohlprofilsegmentes 1 im Bereich der Radialfläche 14 mit einem zylindrischen Vorsprung 15 mit einer Bohrung versehen, während das gegenüberliegende andere stirnseitige Ende des Hohlprofilsegmentes 1 mit einer entsprechend ausgebildeten Hohlkehle 16 in der Radialfläche 14 ausgebildet ist, in welche der zylindrische Vorsprung 15 eines angefügten weiteren Hohlprofilsegmentes 1 exakt einpassbar ist. Die Oberfläche der Hohlkehle 16 ist überdies mit Vertiefungen 160 versehen, wobei durch diese Profilierungen bzw. Vertiefungen 160 im zusammengefügten Zustand geringe Spalte geschaffen werden, in denen beispielsweise ein Dichtmittel angeordnet werden kann.

An den jeweiligen stirnseitigen Enden des Hohlprofilsegmentes 1 im Bereich der Radialflächen 14 sind überdies L-förmig abgebogene und über die Innenfläche 11 vorstehende Spannhaken 17 vorgesehen, deren freie Enden einander zugewandt sind. Wenn demgemäß die aneinander angrenzenden Hohlprofilsegmente 1 im Bereich ihrer Radialflächen 14 aneinander gefügt werden, ergibt sich aus zwei aneinander angrenzenden Spannhaken 17 eine etwa T-förmige Konfiguration, wie aus Figuren 1 und 2 ersichtlich.

Um diese eine Hohlwalze in zusammengefügtem Zustand ergebenden Hohlprofilsegmente 1 miteinander zu verspannen, ist eine Spanneinrichtung vorgesehen, die aus in der Darstellung gemäß Figur 1 und 2 innerhalb des Hohlraumes 101 koaxial hintereinander liegenden Spannringen 2 gebildet werden, von denen eine in der Figur 4 dargestellt ist. Diese Spannring 2 gemäß Figur 4 weist über seinen Außenumfang vorstehende und etwa L-förmig in einer Richtung abgebogene Spannklauen 21 auf, die so ausgeformt sind, dass sie mit jeweils einem Spannhaken 17 eines Hohlprofilsegmentes 1 in Wirkverbindung treten können.

Jede Spanneinrichtung verfügt jedoch neben einem Spannring gem. Figur 2 über einen weiteren Spannring 2, d.h. insgesamt über ein Spannringpaar, wobei der zweite Spannring 2 abweichend von der Figur 4 die radial nach außen vorstehenden Spannklauen 21 in exakt entgegengesetzt gerichteter Konfiguration aufweist, d.h. während in der Darstellung gemäß Figur 4 die Spannklauen in Gegenuhrzeigersinn weisen, ist der in der Darstellung gemäß Figuren 1 und 2 unterhalb befindliche Spannring genau um 180° gedreht, so dass dessen Spannklauen 21 in Uhrzeigersinn weisen. Diese Spannklauen 21 des zweiten Spannrings des Spannringpaares treten somit mit den frei bleibenden weiteren Spannhaken 17 jedes Hohlprofilsegmentes 1 in Wirkverbindung.

Neben einer zentralen Durchgangsbohrung 20, die beispielsweise für den Durchtritt eines einer durchgehenden Achse dienen kann, verfügt jeder Spannring 2 über zwei zylindrische Aufnahmebohrungen 22, die in der Konfiguration gemäß Figur 1 nicht exakt deckungsgleich übereinander positioniert sind. Gleichwohl wird in beiden Aufnahmebohrungen 22 eine gemeinsame Spannschraube 23 mit unrundem, hier ovalem Querschnitt angeordnet, die beispielsweise über einen Innensechskant mit einem entsprechenden Drehwerkzeug betätigt werden kann.

In der in der Figur 1 dargestellten Konfiguration kann das Spannringpaar in axialer Richtung in den Hohlraum 101 eingeführt werden, wobei die Spannklauen 21 der beiden Spannringe 2 die entsprechenden Spannhaken 17 der Hohlprofilsegmente 1 hintergreifen, ohne jedoch bereits eine Verspannung zu bewirken.

Werden sodann die beiden Spannschrauben 23 z.B. um jeweils eine Viertelumdrehung betätigt, so ergibt sich aufgrund des unrunden Querschnittes der Spannschrauben 23 eine Relativbewegung der beiden Spannringe 2 eines Spannringpaares, in deren Folge der sichtbare Spannring 2 gem. Figur 1 in Pfeilrichtung P1, d.h. im Gegenuhrzeigersinn und der darunter befindliche um 180° gedrehte Spannring 2 im Uhrzeigersinn entgegen Pfeilrichtung P1 verdreht wird.

Somit wird, wie aus der Figur 2 ersichtlich, in der sich dann einstellenden zweiten Position eine hohe Klemmkraft zwischen den Spannklauen 21 und den Spannhaken 17 der Hohlprofilsegmente 1 bewirkt, so dass die aneinander angrenzenden Hohlprofilsegmente 1 extrem fest miteinander verspannt werden und sich eine exakt gewünschte Querschnittsgestaltung der Hohlwalze einstellt.

Über die gesamte axiale Länge der Hohlwalze können mehrere Spannringpaare der vorgenannten Art vorgesehen werden.

Es versteht sich, dass neben der in den Figuren dargestellten zylindrischen Ausbildung der Hohlwalze auch andere Querschnittsgestaltungen, etwa Vierkantprofile und dergleichen mehr realisieren lassen, wie es auch möglich ist, eine abweichende Teilung, d.h. mehr oder weniger Hohlprofilsegmente 1 zur Erzielung unterschiedlicher Durchmesser zu verwenden.

Darüber hinaus ist die in der Figur 2 ersichtliche verspannte Stellung durch Zurückbewegung der Spannschrauben 23 in die Ausgangslage gemäß Figur 1 reversibel, so dass die Verspannung etwa zu Demontage- oder Reparaturzwecken auch leicht wieder aufgehoben werden kann.

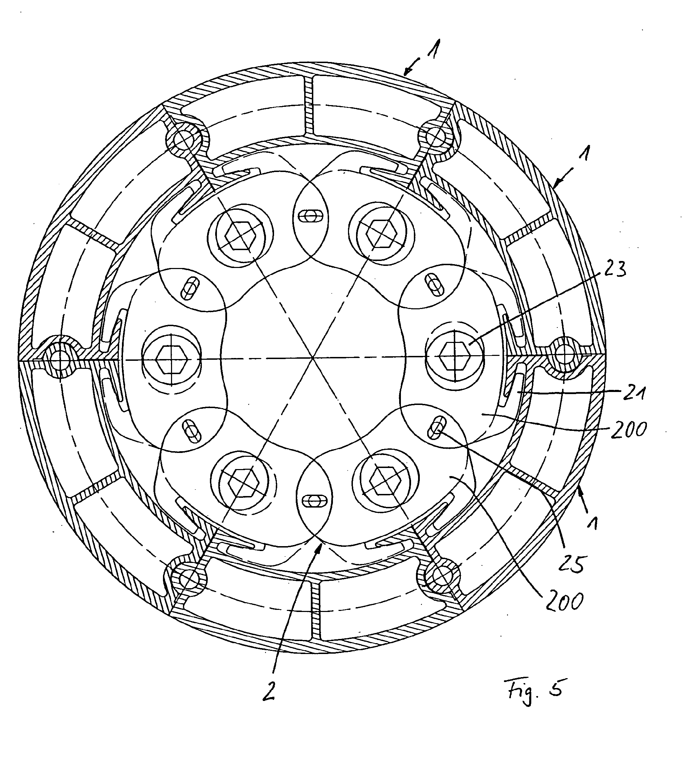

In den Figuren 5, 6 und 7 ist eine weitere Ausführungsform einer Hohlwalze dargestellt, wobei gleiche Teile mit gleichen Bezugsziffern bezeichnet sind und zur Vermeidung von Wiederholungen nicht nochmals gesondert erläutert werden, sofern dies nicht für das weitere Verständnis der Erfindung erforderlich ist.

Die funktionalen Zusammenhänge beim Verspannen der Hohlprofilsegmente 1 sind identisch zu der anhand der Figuren 1 bis 4 erläuterten Ausführungsform, jedoch ist im vorliegenden Ausführungsbeispiel gemäß Figuren 5 bis 7 die Spanneinrichtung abweichend gestaltet, denn sie besteht nicht aus einem Spannringpaar mit zwei massiven hintereinander angeordneten Spannscheiben 2, sondern die einzelnen Spannscheiben 2 werden ihrerseits segmental aus einer Vielzahl von miteinander verketteten Spannringgliedern 200 gebildet, die über Bolzen 25 miteinander verbunden sind.

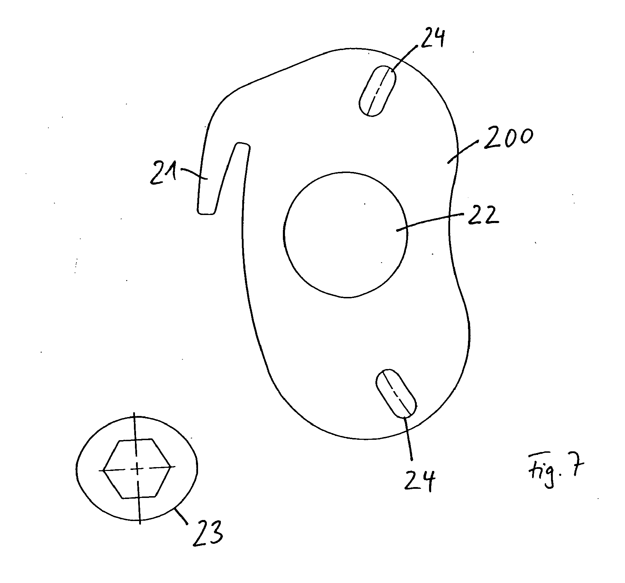

Jedes einzelne Spannringglied 200 weist dabei gemäß Figur 7 eine zentrale Aufnahmebohrung 23 für eine Spannschraube 23 mit unrundem Querschnitt auf, verfügt über eine Spannklaue 21 zum Eingriff in den dafür vorgesehenen Spannhaken des Hohlprofilsegmentes und ist mit zwei Langlöchern 24 ausgestattet, durch den der Verbindungsbolzen 25 zur Verkettung der Spannglieder 200 hindurch tritt. Mit einer solchen Ausgestaltung lassen sich auch große Durchmesser von Hohlwalzen mit einer geringen Zahl von identisch aufgebauten Spanngliedern 200 realisieren.

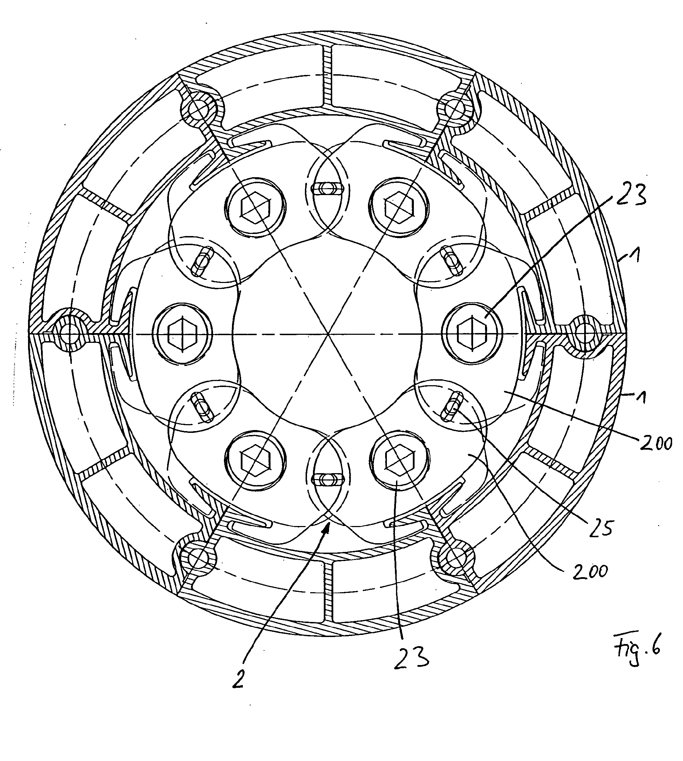

Da jeweils ein Spannglied 200 eines Spannringes 2 mit dem zugeordneten und im wesentlichen deckungsgleichen aber um 180° gedrehten Spannglied 200 des weiteren Spannringes 2 des Spannringpaares eine gemeinsame Spannschraube 23 aufweist, sind die erzielten Spannkräfte sogar noch höher als beim Ausführungsbeispiel gemäß Figuren 1 bis 4. Die Figur 5 zeigt die Anordnung in entspannter, d.h. Montageposition, während die Darstellung gemäß Figur 6 nach Betätigung der Spannschrauben 23 die verspannte Position zeigt, die gleichermaßen reversibel ist.

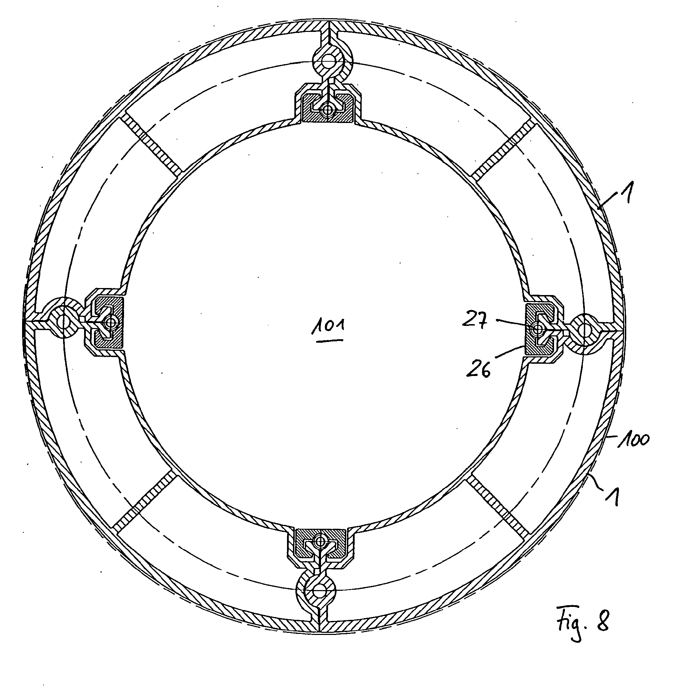

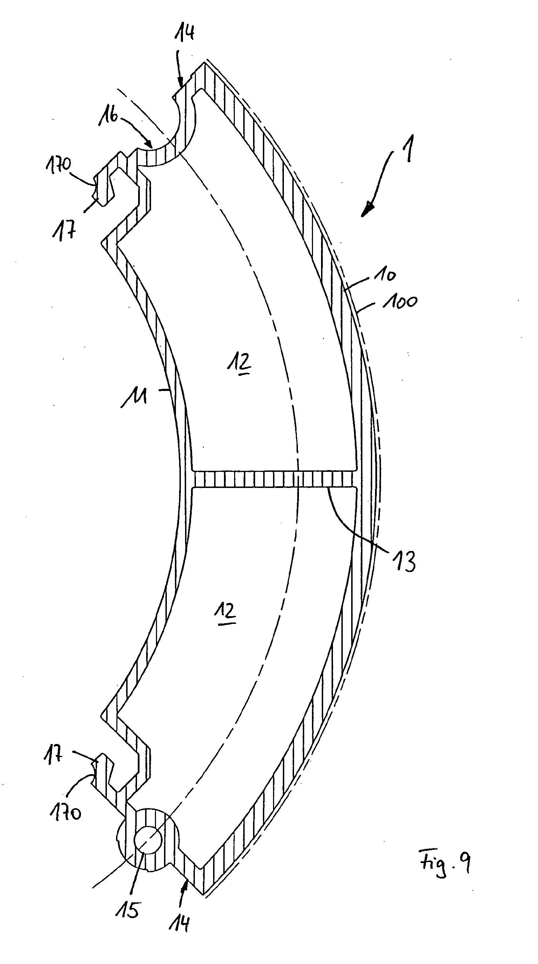

Schließlich zeigen die Figuren 8 bis 11 eine dritte Ausführungsform der Hohlwalze, bei der Hohlprofilsegmente 1 gemäß Figur 9 verwendet werden, deren Spannhaken 17 einander zugewandt, jedoch nicht über die Innenfläche 11 der einzelnen Hohlprofilsegmente 1 hervortreten. Die Verbindung der aneinander angefügten Hohlprofilsegmente 1 erfolgt über einen im wesentlichen U-förmig ausgestalteten Spannbügel 26, der die aneinander angrenzenden Spannhaken 17 zweier benachbarter Hohlprofilsegmente 1 übergreift. Hierbei tritt der Spannbügel 26 ebenso wie die Spannhaken 17 nicht über die Innenfläche 11 des Hohlprofilsegmentes 1 radial nach innen vor, so dass der verbleibende Hohlraum 101 im Innern der Hohlwalze besonders groß ist, so dass dieser Raum für weitere Einbauten zur Verfügung steht.

Die einzelnen Hohlkammern 12 gestatten darüber hinaus bei allen Ausführungsformen eine besonders effektive Temperierung des Walzenmantels, da die Hohlkammern 12 auf einfache Weise von einem geeigneten Temperiermedium durchströmbar sind.

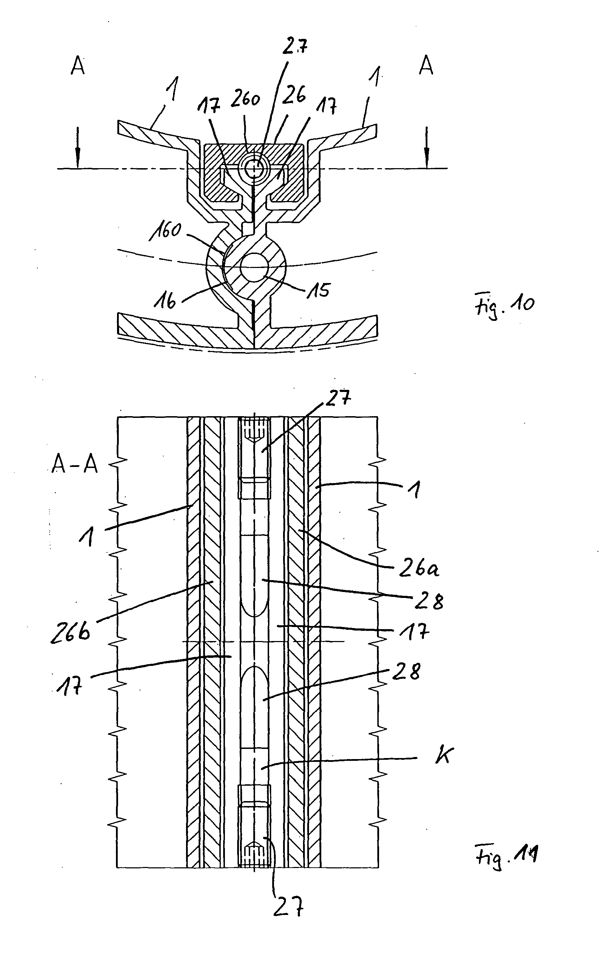

Um eine dauerhaft feste Verspannung der aneinander angrenzenden Hohlprofilsegmente 1 zu ermöglichen, weist die Spannklammer 26, wie insbesondere aus der Figur 10 ersichtlich, in ihrem zentralen, den aneinander angrenzenden Spannhaken 17 gegenüberliegenden Bereich eine Hohlkehle 260 auf, die mit entsprechenden Auskehlungen 170 an den Spannhaken 17 (siehe Figur 9) korrespondiert, und zwar in der Weise, dass in zusammengebautem Zustand gemäß Figur 10 und 11 ein im wesentlichen zylindrischer Kanal K zwischen dem Spannbügel 26 und den Spannhaken 17 gebildet wird, in den Spannbomben 28 eingeschlagen und Gewindebolzen 27 eingedreht werden können, die durch entsprechende Durchmesserwahl eine geringfügige Aufweitung des Kanals K bedingen, wodurch die Klemmkräfte der bewirkten Verbindung effektiv gesteigert werden.

Auch bei diesem Ausführungsbeispiel sind in der Teilungsfuge durch entsprechende Profilierung der Hohlkehle 16 Hohlräume 160 vorgesehen, in denen beispielsweise ein Dichtmittel angeordnet werden kann.

Die Außenfläche 10 der solchermaßen gebildeten und vorangehend erläuterten Hohlwalzen kann nach dem Zusammenfügen der Hohlprofilsegmente 1 z.B. spanabhebend nachbearbeitet werden, etwa überdreht werden, wodurch sich eine sehr glatte Oberfläche ergibt, in der die Teilungsfuge nahezu nicht mehr erkennbar ist. Hierzu kann eine entsprechende Bearbeitungszugabe vorgesehen werden. Bei Bedarf kann darüber hinaus auch eine Beschichtungsauflage 100, etwa eine Gummierung auf die Außenfläche 10 der Hohlwalze aufgebracht werden.

Neben der Ausgestaltung als Hohlwalze in der vorangehend erläuterten Weise liegt es auch im Rahmen der Erfindung, andere rohrförmige Strukturen in der geschilderten Weise aus Hohlprofilsegmenten zu bilden. Beispiels hierfür sind Masten für Solaranlagen oder Fahnenmasten, die in gleicher Weise aus derartigen Hohlprofilsegmenten zusammengefügt werden können. Hierbei ergibt sich überdies der Vorteil, dass durch Aussparung einzelner Hohlprofilsegmente 1 sehr leicht Öffnungen in einem eine große Längserstreckung aufweisenden Mast geschaffen werden können, die für Installationsarbeiten, etwa Verkabelung im Inneren des Masten benötigt werden, so dass auf nachträgliche mechanische Öffnung der Wandung verzichtet werden kann.

Unabhängig von der Ausgestaltung können in nicht näher dargestellter Weise die jeweiligen axialen Enden der erstellten Hohlwalzen oder Rohrkörper mit Naben oder stirnseitigen Deckeln verschlossen werden, ferner können Achsstummel angebracht werden oder aber es wird eine durchgehende Achse durch die Hohlwalze gelegt.

Eine vorangehend erläuterte Hohlwalze eignet sich insbesondere für den Einsatz in schnell laufenden und bahnförmige Materialien verarbeitenden Anlagen, etwa digitale Druckwerke, Papier- oder Kunststoffbahnen verarbeitende Vorrichtungen und dergleichen mehr.

## Patentansprüche

1. Hohlwalze mit einem Walzenmantel und einem inneren Hohlraum (101), **gekennzeichnet durch** Ausbildung des Walzenmantels aus mehreren Hohlprofilsegmenten (1), die an ihren Radialflächen (14) mittels innerhalb des Hohlraumes (101) angeordneter Spannelemente zu der Hohlwalze verbunden sind.

2. Hohlwalze nach Anspruch 1, **dadurch gekennzeichnet, dass** die Hohlprofilsegmente (1) im Bereich ihrer den Hohlraum (101) begrenzenden Innenflächen (11) mit einander zugewandten Spannhaken (17) für den Eingriff der Spannelemente (2) ausgebildet sind.

3. Hohlwalze nach Anspruch 2, **dadurch gekennzeichnet, dass** die Spannhaken (17) radial über die Innenfläche (11) der Hohlprofilsegmente (1) vorstehen.

4. Hohlwalze nach einem der Ansprüche 1 bis 3, **dadurch gekennzeichnet, dass** die Spannelemente von paarweise angeordneten Spannringen (2) gebildet sind, die entlang ihres den Innenflächen (11) benachbarten Außenumfanges mit vorstehenden und mit dem Spannhaken (17) in Wirkverbindung bringbaren Spannklauen (21) ausgerüstet sind, wobei die Spannklauen (21) des einen Spannringes (2) in entgegengesetzte Richtung zu den Spannklauen (21) des anderen Spannringes (2) eines Spannringpaares weisen und die Spannringe mit ihren jeweiligen Spannklauen (21) jeweils wechselweise mit den Spannhaken (17) der Hohlprofilssegmente (1) in Wirkverbindung treten und die Spannringe (2) eines Spannringpaares mittels mindestens einer Verspanneinrichtung relativ zueinander verdrehbar sind.

5. Hohlwalze nach Anspruch 4, **dadurch gekennzeichnet, dass** die Verspanneinrichtung von einer in koaxialen Aufnahmebohrungen (22) der Spannringe (2) eines Spannringpaares verdrehbaren Spannschraube (23) mit unrundem Querschnitt gebildet ist.

6. Hohlwalze nach Anspruch 4 oder 5, **dadurch gekennzeichnet, dass** die Spannringe (2) segmental aus miteinander verketteten Spannringgliedern (200) gebildet sind.

7. Hohlwalze nach Anspruch 6, **dadurch gekennzeichnet, dass** jedes Spannringglied (200) eine Aufnahmebohrung für eine Spannschraube (23) aufweist.

8. Hohlwalze nach einem der Ansprüche 1 oder 2, **dadurch gekennzeichnet, dass** die Spannelemente von im Querschnitt U-förmigen Spannbügeln (26) gebildet sind, die mit jeweils benachbarten Spannhaken (17) aneinander angrenzender Hohlprofilsegmente (1) in Wirkverbindung bringbar sind.

9. Hohlwalze nach Anspruch 8, **dadurch gekennzeichnet, dass** der Spannbügel (26) eine Hohlkehle (260) und die mit dem Spannbügel verspannten Hohlprofilsegmente (1) entsprechende Auskehlungen (16) dergestalt aufweisen, dass sie gemeinsam einen Kanal (K) ausbilden, in die Spannbomben (28) und/oder Gewindebolzen (27) einbringbar sind.

10. Hohlwalze nach einem der Ansprüche 1 bis 9, **dadurch gekennzeichnet, dass** die Hohlprofilsegmente (1) jeweils wechselweise mit einem zylindrischen Vorsprung (15) und entsprechender Hohlkehle (16) im Bereich ihrer Radialflächen (14) ausgebildet sind.

11. Hohlwalze nach einem der Ansprüche 1 bis 10, **dadurch gekennzeichnet, dass** die Hohlprofilsegmente (1) im Bereich ihrer Radialflächen (14) mit Profilierungen (160) zur Aufnahme von Dichtmitteln ausgebildet sind.

12. Hohlwalze nach einem der Ansprüche 1 bis 11, **dadurch gekennzeichnet, dass** die Spannmittel axial in den Hohlraum (101) einschiebbar sind.

13. Hohlwalze nach einem der Ansprüche 1 bis 12, **dadurch gekennzeichnet, dass** die Spannmittel lösbar ausgebildet sind.

14. Hohlwalze nach einem der Ansprüche 1 bis 13, **dadurch gekennzeichnet, dass** auf die Außenfläche (10) eine Beschichtungsauflage (100) aufgebracht ist.

15. Hohlwalze nach einem der Ansprüche 1 bis 14, **dadurch gekennzeichnet, dass** der Hohlraum von einem temperierbaren Fluid durchströmbar ist.

16. Hohlwalze nach einem der Ansprüche 1 bis 15, **dadurch gekennzeichnet, dass** die axialen Enden der Hohlwalze mit Naben und Achsstummeln oder einer durchgehenden Achse ausgebildet sind.
